# EUROPÄISCHE PATENTSCHRIFT

(11) **EP 2 895 772 B1**
(45) Veröffentlichungstag und Bekanntmachung des Hinweises auf die Patenterteilung: **09.11.2016**
(21) Anmeldenummer: 13759739.9
(22) Anmeldetag: 09.09.2013
(51) Int. Cl.: F16H 25/22, F16D 65/18

(54) **KOMBINIERTE FAHRZEUGBREMSE**
COMBINED VEHICLE BRAKE
FREIN COMBINÉ POUR VÉHICULE

(30) Priorität: 17.09.2012 DE 102012216588
(43) Veröffentlichungstag der Anmeldung: 22.07.2015
(73) Patentinhaber: Continental Teves AG & Co. OHG, 60488 Frankfurt (DE)
(72) Erfinder: WINKLER, Thomas, 55131 Mainz (DE); BAUER, Jürgen, 65187 Wiesbaden (DE); BALZ, Jürgen, 65510 Hünstetten-Oberlibbach (DE); PFEIFFER, Stefan, 65817 Eppstein (DE); KOCH, Dirk, 35457 Lollar-Odenhausen (DE); BÖHME, Thomas, 69115 Heidelberg (DE)
(86) Internationale Anmeldenummer: PCT/EP2013/068594
(87) Internationale Veröffentlichungsnummer: WO 2014/040948

(56) Entgegenhaltungen:
- WO-A1-2007/051809
- WO-A1-2008/037738
- DE-A1-102009 014 340

## Beschreibung

Die vorliegende Erfindung betrifft eine kombinierte Fahrzeugbremse, die eine hydraulisch betätigbare Betriebsbremse und eine elektromechanisch betätigbare Feststellbremsvorrichtung aufweist, wobei in einem Bremsgehäuse ein hydraulischer Betriebsdruckraum von einem Bremskolben begrenzt ist, der zur Durchführung von Betriebsbremsungen mit hydraulischem Druckmittel beaufschlagbar ist, so dass der Bremskolben zur Erzielung einer Bremswirkung entlang einer Kolbenlängsachse betätigbar ist, und wobei die Feststellbremsvorrichtung auf den Bremskolben mittels eines Rot-Trans-Getriebes wirkt, das von einem elektromechanischen Aktuator angetrieben wird und eine Betätigung des Bremskolbens zur Durchführung von Feststellbremsvorgängen bewirkt und in der betätigten Stellung hält, wobei das Rot-Trans-Getriebe eine Gewindespindel und eine Gewindemutter aufweist, die über mehrere Wälzkörper miteinander in Kontakt stehen, sowie mit einem Axiallager, an dem sich die Gewindespindel abstützt.

Eine derartige hydraulische Fahrzeugbremse mit elektrisch betätigbarer Feststellbremsvorrichtung ist beispielsweise aus der älteren internationalen Patentanmeldung der Anmelderin WO 2008/037738 A1 bekannt. Das Besondere an der vorbekannten Fahrzeugbremse besteht darin, dass die Wälzkörper zwischen zwei Anschlägen im Gewindegang begrenzt beweglich angeordnet sind, wobei ein Federelement zwischen den Wälzkörpern und einem Anschlag angeordnet ist und bei einem lastfreien Betätigen des Getriebes ein Rutschen der Wälzkörper ermöglicht und bei einem Betätigen des Getriebes unter Last ein Abrollen der Wälzkörper ermöglicht. Durch diese Merkmale wird erreicht, dass das Getriebe kostengünstig herstellbar ist. Das Getriebe ist dabei als ein zweistufiges Untersetzungsgetriebe ausgeführt, wobei eine Stufe des Untersetzungsgetriebes eine selbsthemmende Wirkung aufweist.

Der vorliegenden Erfindung liegt die Aufgabe zugrunde, eine kombinierte Fahrzeugbremse der eingangs genannten Gattung dahingehend zu verbessern, bei der der Gesamtwirkungsgrad der Feststellbremsvorrichtung erhöht werden kann.

Diese Aufgabe wird erfindungsgemäß durch eine Vorrichtung mit den Merkmalen des Anspruchs 1 gelöst. Dabei ist vorgesehen, dass mit dem Axiallager ein weiteres Axiallager in Serie geschaltet ist, das nur beim Lösevorgang der Feststellbremsvorrichtung wirkt und so ausgelegt ist, dass das vom weiteren Axiallager übertragene Reibmoment höher ist als das vom Rot-Trans-Getriebe rücktreibende Antriebsmoment der Gewindespindel.

Weitere vorteilhafte Ausgestaltungen sind den abhängigen Unteransprüchen 2 bis 11 entnehmbar. So ist in einer besonders vorteilhaften Weiterbildung des Erfindungsgegenstandes vorgesehen, dass das weitere Axiallager durch eine im Bremsgehäuse ausgebildete erste Reibfläche sowie eine zweite Reibfläche gebildet wird, die an einem Drehmomentübertragungselement ausgebildet ist, das mit der Gewinde-spindel in eine Kraftübertragungsverbindung bringbar ist.

Bei einer vorteilhaften, kostengünstig herstellbaren Ausführungsform ist die erste Reibfläche an einer ringförmigen Scheibe ausgebildet. Die Scheibe besteht dabei aus einem Kunststoff oder einem Metall.

Eine andere vorteilhafte Ausführungsvariante sieht vor, dass die erste Reibfläche an einer im Bremsengehäuse ausgebildeten, zur Gewindespindel senkrecht stehenden Wand vorgesehen ist, die den hydraulischen Betriebsdruckraum begrenzt.

Eine optimale Auslegung der im Getriebe verwendeten Axiallager wird bei einer vorteilhaften Weiterbildung des Erfindungsgegenstandes dadurch erreicht, dass der mittlere Reibradius der ersten Reibfläche dem mittleren Rollradius des ersten Axiallagers entspricht.

Weitere vorteilhafte Ausgestaltungen sind den abhängigen Unteransprüchen 8 bis 11 entnehmbar.

Die Erfindung wird nachfolgend anhand eines Ausführungsbeispiels im Zusammenhang mit der beiliegenden Zeichnung näher erläutert. In der Zeichnung zeigen:
Fig. 1 eine Schnittdarstellung der erfindungsgemäßen Fahrzeugbremse mit hydraulisch betätigbarer Betriebsbremse und elektromechanisch betätigbarer Feststellbremse; und
Fig. 2, 3 teilweise als Explosionszeichnungen eine Ausführung des erfindungsgemäßen Getriebes, das in eine Fahrzeugbremse nach Fig. 1 einsetzbar ist.

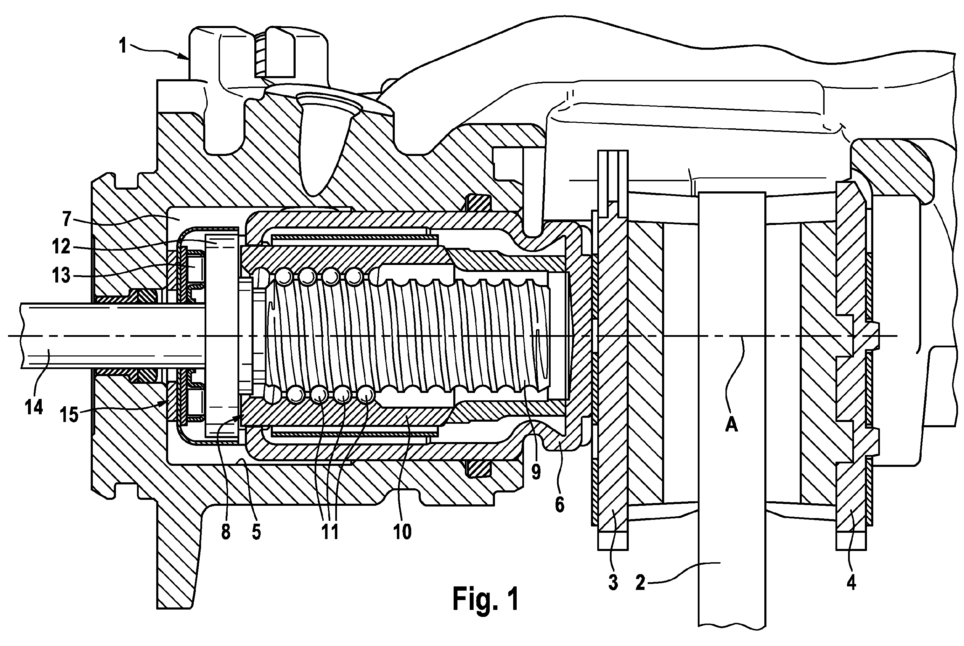

Die in Fig. 1 dargestellte erfindungsgemäße Fahrzeugbremse weist einerseits eine hydraulisch betätigbare Betriebsbremse und andererseits eine elektromechanisch betätigbare Feststellbremsvorrichtung auf. Die Fahrzeugbremse weist ein Bremsgehäuse 1 auf, welches den äußeren Rand einer lediglich schematisch angedeuteten Bremsscheibe 2 und zwei Bremsbeläge 3, 4 umgreift. Das Bremsgehäuse 1 bildet auf seiner Innenseite einen Bremszylinder 5, der einen Bremskolben 6 axial verschiebbar aufnimmt. In den zwischen Bremszylinder 5 und Bremskolben 6 gebildeten Betriebsdruckraum 7 kann zur Durchführung von Betriebsbremsungen Bremsflüssigkeit zugeführt werden, so dass sich ein Bremsdruck aufbaut, der den Bremskolben 6 axial entlang einer Kolbenlängsachse A zur Bremsscheibe hin verschiebt. Dadurch wird der dem Bremskolben 6 zugewandte Bremsbelag 3 gegen die Bremsscheibe 2 gedrückt, wobei sich als Reaktion das Bremsgehäuse 1 in der entgegen gesetzten Richtung verschiebt und dadurch auch den anderen Bremsbelag 4 gegen die Bremsscheibe 2 drückt.

Eine Feststellbremsvorrichtung zur Durchführung von Feststellbremsvorgängen ist elektromechanisch betätigbar und wirkt ebenfalls auf den Bremskolben 6. Dazu ist ein Rot - Trans - Getriebe 8 vorgesehen, das die Rotationsbewegung eines nicht gezeigten elektromechanischen Aktuators in eine Translationsbewegung umsetzt und eine Betätigung des Bremskolbens 6 entlang der Achse A bewirkt. Das Getriebe 8 wird im Wesentlichen durch eine Gewindespindel 9 und eine Gewindemutter 10 gebildet, die über Wälzkörper 11 miteinander in Verbindung stehen. Die Wälzkörper sind als Kugeln 11 ausgebildet. Ein mit der Gewindespindel 9 verbundener Schaft 14 ragt an der der Bremsscheibe abgewandten Seite aus dem Bremsgehäuse 1 heraus und wird unter Zwischenschaltung eines nicht dargestellten Untersetzungsgetriebes von einem ebenfalls nicht gezeigten elektromechanischen Aktuator angetrieben. Die auf die Gewindespindel 9 übertragene Rotationsbewegung wird über die Kugeln 11, die sich im Gewindegang zwischen Gewindespindel 9 und Gewindemutter 10 befinden, auf die Gewindemutter 10 übertragen, die eine Translationsbewegung in Richtung der Achse A vollzieht. Dadurch wird auch der Bremskolben 6 betätigt, an dem sich die Gewindemutter 10 abstützt. Gleichzeitig stützt sich die Gewindespindel 9 über einen mit der Spindel 9 verbundenen Kragen 12 und ein Axiallager 13 am Bremsgehäuse 1 ab. Das Getriebe 1 setzt also die Drehbewegung des elektromechanischen Aktuators in eine Linearbewegung um und ist für die Generierung sowohl der Zuspannkraft als auch der Lösekraft zur Durchführung eines Feststellbremsvorganges verantwortlich.

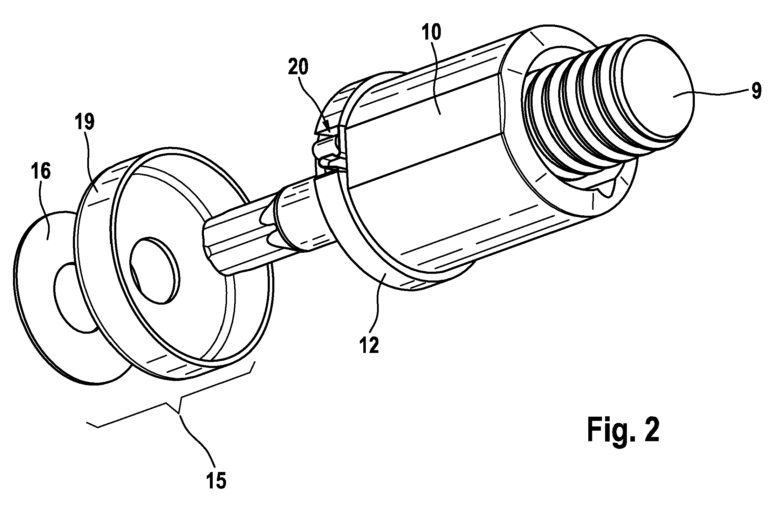

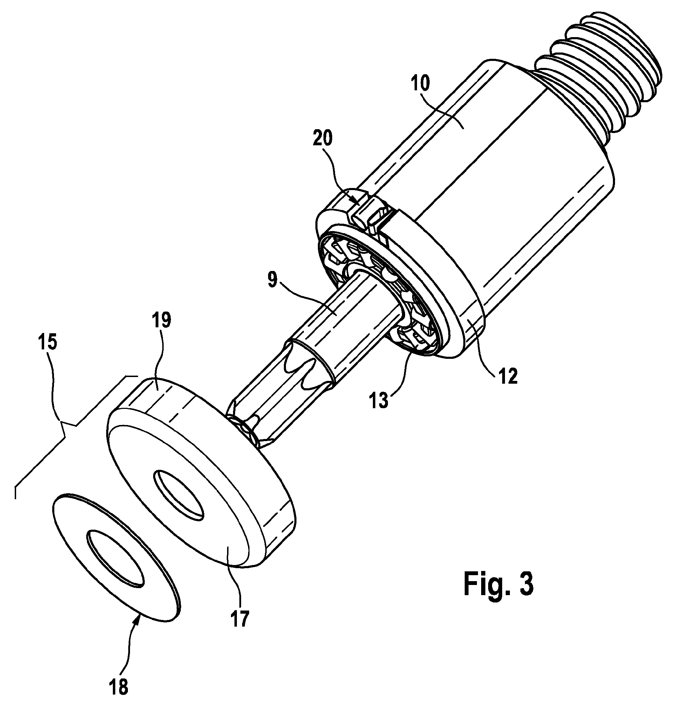

Wie außerdem der Zeichnung zu entnehmen ist, ist mit dem Axiallager 13 ein weiteres Axiallager in Serie geschaltet, das mit dem Bezugszeichen 15 versehen ist. Dabei besteht das weitere Axiallager 15, das nur bei einem Lösevorgang der Feststellbremsvorrichtung wirksam ist, im Prinzip aus einer im Bremsgehäuse 1 ausgebildeten ersten Reibfläche 16 sowie einer zweiten Reibfläche 17 gebildet wird, die mit der Gewindespindel 9 in eine Kraftübertragungsverbindung bringbar ist. Bei der in der Zeichnung gezeigten vorteilhaften Ausführung des Erfindungsgegenstandes ist die erste Reibfläche 16 an einer ringförmigen Scheibe 18 ausgebildet, die am Bremsengehäuse 1 axial abgestützt ist. Die Scheibe 18 kann dabei aus einem geeigneten Kunststoff oder einem Metall ausgebildet sein. Alternativ kann die erste Reibfläche 16 an einer senkrecht stehenden Wand des Bremsengehäuses 1 ausgebildet sein, durch die der hydraulische Bremsdruckraum 7 begrenzt ist. Die zweite Reibfläche 18 ist demgegenüber an einem vorzugsweise topfförmigen Drehmomentübertragungselement 19 ausgebildet, das den vorhin erwähnten radialen Kragen 12 der Gewindespindel 9 radial umgreift. Eine Übertragung der in der Zuspannrichtung der Feststellbremsvorrichtung wirkenden Kraft von der Gewindespindel 9 auf das Drehmomentübertragungselement 19 erfolgt mittels einer Freilaufmechanik, die in Fig. 2 und 3 angedeutet ist und die das Bezugszeichen 20 trägt. Eine optimale Funktion der erfindungsgemäßen Bremsvorrichtung wird dadurch erreicht, dass der mittlere Reibradius der ersten Reibfläche 16 dem mittleren Rollradius des ersten Axiallagers 13 entspricht. Das zweite Axial- bzw. Gleitlager 15 ist so ausgelegt, dass das aus der Zuspannkraft resultierende Reibmoment grösser ist, als das im Getriebe 8 generierte Moment.

Während die Zuspannung der Feststellbremsvorrichtung über das erste Axiallager 13 erfolgt, wird die Zuspannkraft nur über das zweite Axiallager 15, und zwar vorzugsweise über die Relativbewegung des Drehmomentübertragungselements 19 gegenüber der Scheibe 18 abgebaut. Ansonsten ist die Funktionsweise der oben beschriebenen Anordnung beispielsweise aus der eingangs erwähnten gattungsbildenden internationalen Anmeldung WO 2008/037738 A1 bekannt und braucht in diesem Zusammenhang nicht näher erläutert zu werden.

## Patentansprüche

1. Kombinierte Fahrzeugbremse, die eine hydraulisch betätigbare Betriebsbremse und eine elektromechanisch betätigbare Feststellbremsvorrichtung aufweist, wobei in einem Bremsgehäuse (1) ein hydraulischer Betriebsdruckraum (7) von einem Bremskolben (6) begrenzt ist, der zur Durchführung von Betriebsbremsungen mit hydraulischem Druckmittel beaufschlagbar ist, so dass der Bremskolben (6) zur Erzielung einer Bremswirkung entlang einer Kolbenlängsachse (A) betätigbar ist, und wobei die Feststellbremsvorrichtung auf den Bremskolben (6) mittels eines Rot-Trans-Getriebes (8) wirkt, das von einem elektromechanischen Aktuator angetrieben wird und eine Betätigung des Bremskolbens (6) zur Durchführung von Feststellbremsvorgängen bewirkt und in der betätigten Stellung hält, wobei das Rot-Trans-Getriebe (8) eine Gewindespindel (9) und eine Gewindemutter (10) aufweist, die über mehrere Wälzkörper (11) miteinander in Kontakt stehen, sowie mit einem Axiallager (13), an dem sich die Gewindespindel () abstützt, **dadurch gekennzeichnet, dass** mit dem Axiallager (13) ein weiteres Axiallager (15) in Serie geschaltet ist, das nur beim Lösevorgang der Feststellbremsvorrichtung wirkt und so ausgelegt ist, dass das vom weiteren Axiallager (15) übertragene Reibmoment höher ist als das vom Rot-Trans-Getriebe (8) generierte, rücktreibende Moment der Gewindespindel (9).

2. Kombinierte Fahrzeugbremse nach Anspruch 1, **dadurch gekennzeichnet, dass** das weitere Axiallager (15) durch eine im Bremsgehäuse (1) ausgebildete erste Reibfläche (16) sowie eine zweite Reibfläche (17) gebildet wird, die an einem Drehmomentübertragungselement (19) ausgebildet ist, das mit der Gewindespindel (9) in eine Kraftübertragungsverbindung bringbar ist.

3. Kombinierte Fahrzeugbremse nach Anspruch 2, **dadurch gekennzeichnet, dass** die erste Reibfläche (16) an einer ringförmigen Scheibe (18) ausgebildet ist.

4. Kombinierte Fahrzeugbremse nach Anspruch 3, **dadurch gekennzeichnet, dass** die erste Reibfläche (16) an einer im Bremsengehäuse (1) ausgebildeten, zur Gewindespindel (9) senkrecht stehenden Wand vorgesehen ist, die den hydraulischen Betriebsdruckraum (7) begrenzt.

5. Kombinierte Fahrzeugbremse nach Anspruch 3, **dadurch gekennzeichnet, dass** die Scheibe (18) aus einem Kunststoff besteht.

6. Kombinierte Fahrzeugbremse nach Anspruch 3, **dadurch gekennzeichnet, dass** die Scheibe (18) aus einem Metall hergestellt ist.

7. Kombinierte Fahrzeugbremse nach einem der vorhergehenden Ansprüche 2 bis 6, **dadurch gekennzeichnet, dass** der mittlere Reibradius der ersten Reibfläche (16) dem mittleren Rollradius des ersten Axiallagers (13) entspricht.

8. Kombinierte Fahrzeugbremse nach einem der vorhergehenden Ansprüche 2 bis 6, **dadurch gekennzeichnet, dass** das Drehmomentübertragungselement (19) topfförmig ausgeführt ist und einen an der Gewindespindel (9) ausgebildeten radialen Kragen (12) umgreift.

9. Kombinierte Fahrzeugbremse nach Anspruch 7, **dadurch gekennzeichnet, dass** zwischen dem Drehmomentübertragungselement (19) und dem Kragen (12) eine Freilaufmechanik (20) vorgesehen ist.

10. Kombinierte Fahrzeugbremse nach Anspruch 9, **dadurch gekennzeichnet, dass** die Freilaufmechanik (20) als eine Rampen-Wälzkörper-Anordnung ausgeführt ist.

11. Kombinierte Fahrzeugbremse nach Anspruch 9, **dadurch gekennzeichnet, dass** die Freilaufmechanik als eine Schleppfeder ausgeführt ist.

## Claims

1. Combined vehicle brake which has a hydraulically actuable service brake and an electromechanically actuable parking brake apparatus, a hydraulic service pressure space (7) being delimited in a brake housing (1) by a brake piston (6) which can be loaded with hydraulic pressure medium in order to carry out service brake operations, with the result that the brake piston (6) can be actuated along a piston longitudinal axis (A) in order to achieve a braking action, and the parking brake apparatus acting on the brake piston (6) by means of a rotational/translational gear mechanism (8) which is driven by an electromechanical actuator and brings about an actuation of the brake piston (6) in order to carry out parking brake operations and stops in the actuated position, the rotational/translational gear mechanism (8) having a threaded spindle (9) and a threaded nut (10) which are in contact with one another via a plurality of rolling bodies (11), and with an axial bearing (13), on which the threaded spindle () is supported, **characterized in that** a further axial bearing (15) is connected in series with the axial bearing (13), which further axial bearing (15) acts only during the release operation of the parking brake apparatus and is designed in such a way that the frictional moment which is transmitted by the further axial bearing (15) is higher than the retrodriving moment of the threaded spindle (9) which is generated by the rotational/translational gear mechanism (8).

2. Combined vehicle brake according to Claim 1, **characterized in that** the further axial bearing (15) is formed by a first frictional face (16) which is configured in the brake housing (1) and a second frictional face (17) which is configured on a torque transmission element (19) which can be brought into force-transmitting connection with the threaded spindle (9).

3. Combined vehicle brake according to Claim 2, **characterized in that** the first frictional face (16) is configured on an annular disk (18).

4. Combined vehicle brake according to Claim 3, **characterized in that** the first frictional face (16) is provided on a wall which is configured in the brake housing (1), stands perpendicularly with respect to the threaded spindle (9) and delimits the hydraulic service pressure space (7).

5. Combined vehicle brake according to Claim 3, **characterized in that** the disk (18) is composed of a plastic.

6. Combined vehicle brake according to Claim 3, **characterized in that** the disk (18) is produced from a metal.

7. Combined vehicle brake according to one of the preceding Claims 2 to 6, **characterized in that** the mean frictional radius of the first frictional face (16) corresponds to the mean rolling radius of the first axial bearing (13).

8. Combined vehicle brake according to one of the preceding Claims 2 to 6, **characterized in that** the torque transmission element (19) is of cup-shaped configuration and engages around a radial collar (12) which is configured on the threaded spindle (9).

9. Combined vehicle brake according to Claim 7, **characterized in that** a freewheel mechanism (20) is provided between the torque transmission element (19) and the collar (12).

10. Combined vehicle brake according to Claim 9, **characterized in that** the freewheel mechanism (20) is configured as a ramp/rolling body arrangement.

11. Combined vehicle brake according to Claim 9, **characterized in that** the freewheel mechanism is configured as a drag spring.

## Revendications

1. Frein de véhicule combiné, lequel possède un frein de service pouvant être actionné hydrauliquement et un dispositif de freinage d'immobilisation pouvant être actionné de façon électromécanique, un espace de pression de service hydraulique (7) dans un boîtier de frein (1) étant délimité par un piston de frein (6), lequel peut être chargé par un fluide pressurisé hydraulique en vue de réaliser des freinages de service, de sorte que le piston de frein (6) peut être actionné le long d'un axe longitudinal de piston (A) en vue d'obtenir un effet de freinage, et le dispositif de freinage d'immobilisation agissant sur le piston de frein (6) au moyen d'un engrenage à rotation et translation (8) qui est entraîné par un actionneur électromécanique et provoque un actionnement du piston de frein (6) en vue de réaliser les opérations de freinage d'immobilisation et le maintient dans la position actionnée, l'engrenage à rotation et translation (8) possédant une tige filetée (9) et un écrou fileté (10) qui se trouvent mutuellement en contact par le biais de plusieurs corps de roulement (11), ainsi qu'avec un palier axial (13) sur lequel s'appuie la tige filetée (), **caractérisé en ce qu'**un autre palier axial (15) est connecté en série avec le palier axial (13), lequel n'agit que lors de l'opération de desserrage du dispositif de freinage d'immobilisation et est conçu de telle sorte que le moment de friction transmis par le palier axial supplémentaire (15) est supérieur au moment de rappel de la tige filetée (9), généré par l'engrenage à rotation et translation (8).

2. Frein de véhicule combiné selon la revendication 1, **caractérisé en ce que** le palier axial supplémentaire (15) est formé par une première surface de friction (16) formée dans le boîtier de frein (1) ainsi qu'une deuxième surface de friction (17) qui est formée sur un élément de transmission de couple (19), lequel peut être amené en liaison de transmission de force avec la tige filetée (9).

3. Frein de véhicule combiné selon la revendication 2, **caractérisé en ce que** la première surface de friction (16) est formée sur une plaque de forme annulaire (18).

4. Frein de véhicule combiné selon la revendication 3, **caractérisé en ce que** la première surface de friction (16) se trouve sur une paroi formée dans le boîtier de frein (1), qui est verticale par rapport à la tige filetée (9) et qui délimite l'espace de pression de service (7) hydraulique.

5. Frein de véhicule combiné selon la revendication 3, **caractérisé en ce que** la plaque (18) est constituée d'une matière plastique.

6. Frein de véhicule combiné selon la revendication 3, **caractérisé en ce que** la plaque (18) est fabriquée dans un métal.

7. Frein de véhicule combiné selon l'une des revendications 2 à 6, **caractérisé en ce que** le rayon de friction central de la première surface de friction (16) correspond au rayon de roulage central du premier palier axial (13).

8. Frein de véhicule combiné selon l'une des revendications 2 à 6, **caractérisé en ce que** l'élément de transmission de couple (19) est réalisé en forme de pot et entoure une collerette (12) radiale formée sur la tige filetée (9).

9. Frein de véhicule combiné selon la revendication 7, **caractérisé en ce qu'**un mécanisme de roue libre (20) se trouve entre l'élément de transmission de couple (19) et la collerette (12).

10. Frein de véhicule combiné selon la revendication 9, **caractérisé en ce que** le mécanisme de roue libre (20) est réalisé sous la forme d'un arrangement de rampe et de corps de roulement.

11. Frein de véhicule combiné selon la revendication 9, **caractérisé en ce que** le mécanisme de roue libre est réalisé sous la forme d'une bride glissante.
